(19) Europäisches Patentamt
European Patent Office
Office européen des brevets

(11) **EP 2 141 868 B1**

(12) **FASCICULE DE BREVET EUROPEEN**

(45) Date de publication et mention
de la délivrance du brevet:
**23.11.2011 Bulletin 2011/47**

(51) Int Cl.:
*H04L 12/56* *(2006.01)*     *H04L 12/28* *(2006.01)*

(21) Numéro de dépôt: **09164039.1**

(22) Date de dépôt: **29.06.2009**

(54) **Contrôle d'admission à un service**

Dienstzulassungskontrolle

Service admission control

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **30.06.2008 FR 0854383**

(43) Date de publication de la demande:
**06.01.2010 Bulletin 2010/01**

(73) Titulaire: **FRANCE TELECOM
75015 Paris (FR)**

(72) Inventeur: **Dugeon, Olivier
22560 Pleumeur-Bodou (FR)**

(74) Mandataire: **Delumeau, François Guy et al
Cabinet Beau de Loménie
158, rue de l'Université
75340 Paris Cedex 07 (FR)**

(56) Documents cités:
**US-A1- 2002 163 883     US-A1- 2006 028 981**

**Description**

Arrière-plan de l'invention

La présente invention se rapporte au domaine général des télécommunications.

Elle concerne plus particulièrement les mécanismes de contrôle d'accès, par un terminal, à un service proposé par un réseau de télécommunications.

De façon générale, de tels mécanismes consistent à vérifier la disponibilité des ressources réseau avant d'autoriser un service. Ils sont également connus sous le vocable de techniques de contrôle d'admission d'appel ou Connection Admission Control (CAC) en anglais. On peut en avoir un exemple dans: US 2006/028981.

Dans l'état actuel de la technique, il existe des mécanismes de contrôle d'admission réparti ou distribué dans un réseau de télécommunications. De tels mécanismes ont été notamment développés dans le cadre des standards RSVP (Resource ReSerVation Protocol) et NSIS (Next Step In Signalling) de l'IETF.

Dans ces mécanismes, le terminal émet une requête d'accès à un service sous la forme de messages de signalisation dédiés (aussi appelés protocole de signalisation), échangés avec le réseau. Ce protocole de signalisation suit le même chemin, dans le réseau de télécommunications, que les données associées au service requis par l'utilisateur. Autrement dit, il traverse les mêmes équipements du réseau que ces données.

Chaque équipement vérifie, au passage du protocole de signalisation, la disponibilité locale (c'est-à-dire au niveau de l'équipement à proprement parler) des ressources réseau nécessaires pour fournir le service, avant de transmettre la requête à l'équipement suivant. Si, après passage par les divers équipements concernés du réseau, l'accès au service est autorisé (disponibilité des ressources réseau auprès de chaque équipement traversé), un message d'acquittement positif du protocole de signalisation est envoyé à chaque équipement qui, sur réception de ce message, procède à la configuration nécessaire pour délivrer le service (établissement d'un contexte correspondant à la réservation des ressources, etc.).

Ainsi, dans les mécanismes de contrôle d'admission réparti décrits précédemment, on évalue la disponibilité des ressources de bout en bout sur l'ensemble du réseau de télécommunications auprès de chaque équipement traversé par les données associées au service requis. Ces mécanismes nécessitent donc que l'ensemble des équipements du réseau traversés supportent le protocole de signalisation mis en oeuvre, pour être en mesure d'interpréter les messages échangés selon ce protocole et de communiquer selon ce protocole.

Par conséquent, l'application et le déploiement de tels mécanismes est particulièrement complexe et contraignante en termes de mise en oeuvre de la signalisation.

Objet et résumé de l'invention

La présente invention permet de pallier ces inconvénients, en proposant, selon un premier aspect, un procédé de traitement d'une requête d'accès à un service émise par un terminal, ce procédé étant mis en oeuvre par une passerelle connectée audit terminal et à un point de raccordement à un réseau de télécommunications. Conformément à l'invention, le procédé de traitement comprend les étapes suivantes :

- obtention d'informations relatives à des ressources réseau réservées par au moins une autre passerelle connectée à ce même point de raccordement, pour au moins un service fourni via ce point de raccordement ;
- vérification, à l'aide au moins de ces informations, qu'au moins la passerelle connectée au terminal et le point de raccordement disposent respectivement de ressources réseau nécessaires pour fournir le service requis par le terminal ;
- si tel est le cas :

  ○ réservation de ces ressources réseau ; et
  ○ information d'au moins une autre passerelle connectée au point de raccordement pour au moins un service fourni via ce point de raccordement de cette réservation ;

- sinon, rejet de l'accès au service.

Corrélativement, l'invention vise également une passerelle connectée à un point de raccordement à un réseau de télécommunication, et comprenant :

- des moyens de réception d'une requête d'accès à un service émise par un terminal connecté à cette passerelle ;
- des moyens d'obtention d'informations relatives aux ressources réseau réservées par au moins une autre passerelle connectée à ce même point de raccordement pour au moins un service fourni via ce point de raccordement ;

- des moyens de vérification, à l'aide au moins de ces informations, qu'au moins la passerelle connectée au terminal et le point de raccordement disposent de ressources réseau nécessaires pour fournir le service requis par le terminal ;
- des moyens de réservation de ces ressources réseau et des moyens d'information de cette réservation d'au moins une autre passerelle connectée à ce même point de raccordement pour au moins un service fourni via ce point de raccordement, activés si tel est le cas ; et
- des moyens de rejet de l'accès au service activés sinon.

On notera que, dans l'ensemble de ce document, on entend par passerelle ou passerelle d'accès, un équipement interconnectant deux réseaux de communications, notamment, mais non exclusivement, un réseau local de type LAN (pour "Local Area Network") et un réseau plus étendu de type MAN (pour "Metropolitan Area Network") ou WAN (pour "Wide Area Network"). Un tel réseau local peut être, par exemple, un réseau d'habitation (exemple d'une passerelle domestique ou résidentielle), un réseau d'entreprise, un réseau d'un lieu public particulier tel qu'un aéroport, etc. Par abus de langage, ces différentes passerelles sont souvent qualifiées de passerelles résidentielles, même lorsqu'elles ne trouvent pas usage dans le contexte particulier d'une habitation.

Par ailleurs, on entend par point de raccordement à un réseau de télécommunications, toute entité se situant au-delà de la passerelle d'accès, dans le réseau de télécommunications, et permettant d'accéder au coeur du réseau de télécommunications.

Ainsi, dans un mode de réalisation particulier de l'invention, l'entité située à la frontière entre la boucle locale (comprenant notamment la ligne de cuivre en sortie de la passerelle d'accès) et le réseau de collecte (aussi appelé backhaul) du réseau de télécommunications est un point de raccordement au réseau de télécommunications au sens de l'invention. Cette entité est par exemple un dispositif DSLAM (Digital Subscriber Line Access Multiplexer) pour un réseau de type xDSL, un commutateur Ethernet pour un réseau de type Gigabit-Ethernet, ou un équipement OLT (Optical Link Terminal) pour un réseau de type optique basé sur une architecture PON (Passive Optical Network). Par réseau de collecte, on entend l'ensemble des équipements situés entre cette entité (par exemple le DSLAM) et le noeud de raccordement au réseau coeur, ainsi que les liens de raccordement compris entre cette entité et le réseau coeur (ou réseau backbone).

Par ailleurs, au sens de l'invention, on entend par ressources réseau d'une entité d'un réseau de télécommunications, tout type de ressources (bande passante dans le sens montant ou descendant, mémoire, capacité de stockage des paquets de données, dimensionnement des bus de données, etc.) mises à disposition par cette entité pour permettre des échanges de données sur un réseau. Par exemple, la bande passante offerte en sortie d'une passerelle d'accès, sur le lien existant entre la passerelle et le point de raccordement au réseau de collecte, représente des ressources réseau de la passerelle d'accès au sens de l'invention.

L'invention se rapporte donc à une fonction de contrôle d'accès à un service (aussi appelée fonction d'admission d'appel) mise en oeuvre dans une passerelle d'accès au réseau de télécommunications (ex. dans une passerelle domestique ou résidentielle) et qui prend en compte la disponibilité des ressources réseau au niveau de la passerelle et d'un point de raccordement au réseau.

Selon l'invention, il n'est donc plus nécessaire que l'ensemble des équipements du réseau traversés supportent le protocole de signalisation mis en oeuvre pour un contrôle d'admission d'appel, puisque ce contrôle d'admission d'appel est mis en oeuvre au niveau de la passerelle d'accès elle-même, et ne fait intervenir que les équipements situés entre la passerelle et le point de raccordement au réseau considéré.

Dans un mode de réalisation avantageux de l'invention, le point de raccordement considéré est un point de contention identifié dans le réseau de télécommunications, quel qu'il soit.

Ainsi, dans un contexte particulier où des contentions existent sur le lien entre une passerelle d'accès et un point de raccordement au réseau de collecte, ainsi par exemple que sur le lien en sortie de ce point de raccordement, et où le réseau de collecte est quant à lui correctement dimensionné, voire surdimensionné par rapport aux besoins, il peut être avantageux, dans le cadre de l'invention, de considérer ce point de raccordement au réseau de collecte.

L'invention prend donc en charge la répartition des ressources du point de raccordement entre les différents utilisateurs qui lui sont connectés, en limitant les contentions ou les pertes de paquets.

Dans un mode particulier de réalisation de l'invention dans lequel le point de raccordement considéré est un point de raccordement au réseau de collecte du réseau de télécommunications, l'invention permet avantageusement de gérer les contentions pouvant exister dans la boucle locale et plus généralement, dans le réseau d'accès au réseau de télécommunications, et ce, en vérifiant la disponibilité des ressources au niveau au moins de la passerelle d'accès (ex. au niveau de la ligne de cuivre) et du point de raccordement au réseau de collecte (ex. au niveau de l'interface de raccordement du DSLAM au réseau de collecte).

Les liens d'accès respectivement entre la passerelle et le point de raccordement au réseau de collecte (ressource réseau de la passerelle au sens de l'invention) et entre le point de raccordement et le réseau de collecte (ressource réseau du point de raccordement au sens de l'invention) constituent en effet aujourd'hui deux points de contentions majeures dans un réseau de télécommunications. Le réseau de collecte et le réseau coeur sont généralement surdimensionnés par rapport aux besoins des services offerts par le réseau de télécommunications.

Le contrôle d'accès à un service requis par un terminal est permis, conformément à l'invention :

- d'une part, grâce à des informations obtenues par la passerelle connectée au terminal et relatives aux ressources réseau réservées par d'autres passerelles connectées au même point de raccordement que cette passerelle ; et
- d'autre part, grâce à la mise à disposition d'autres passerelles connectées au même point de raccordement que cette passerelle, des réservations qu'elle effectue.

Ainsi, on comprend bien que les performances du mécanisme de contrôle d'accès selon l'invention dépendent du nombre de passerelles informées et du nombre de passerelles dont on reçoit des informations par rapport au nombre de passerelles connectées au point de raccordement, et qu'il est possible de jouer sur ces nombres pour atteindre un compromis performance/complexité acceptable en fonction de la position du point de raccordement considéré dans le réseau de télécommunications (i.e. de la profondeur qui sépare ce point de raccordement du coeur de réseau).

En effet, la complexité de mise en oeuvre de l'invention est bornée par le nombre d'abonnés (i.e. de passerelles d'accès) présents derrière un même point de raccordement.

Par conséquent, lorsque le point de raccordement considéré est un point de raccordement au réseau de collecte du réseau de télécommunications, tel un DSLAM, le déploiement de l'invention dans le cadre d'un réseau de télécommunications de grande dimension est facilité, le nombre de passerelles derrière un tel point de raccordement étant relativement limité (par exemple, 1000 passerelles). Ainsi l'application de l'invention, y compris dans un réseau de grande dimension tel un réseau xDSL (x Digital Subscriber Line), est permise, i.e., le passage à l'échelle du mécanisme de contrôle d'accès proposé par l'invention est possible.

Ceci est d'autant plus vrai que le procédé de traitement selon l'invention peut être facilement déployé par un opérateur car il est mis en oeuvre au sein même de la passerelle d'accès que l'opérateur maîtrise. Il ne nécessite donc pas d'ajout de plateforme supplémentaire ni de mises à jour d'équipements du réseau (notamment en termes de signalisation) autres que la passerelle contrairement aux techniques proposées dans l'art antérieur.

Lorsque le point de raccordement au réseau de télécommunications considéré est connecté à un nombre très important de passerelles, l'utilisation d'informations partielles et la mise à disposition des informations de réservation des ressources à un nombre limité de ces passerelles pourront être envisagées de sorte à limiter la complexité de mise en oeuvre de l'invention.

Dans un mode particulier de réalisation de l'invention, lors de l'étape d'obtention, les informations sont reçues à partir d'au moins un message diffusé aux membres d'un groupe de diffusion multicast associé au point de raccordement et auquel appartient la passerelle connectée au terminal, et lors de l'étape d'information, ladite au moins une autre passerelle est informée dans un message diffusé aux membres de ce groupe de diffusion multicast.

Corrélativement, dans ce mode particulier de réalisation, la passerelle selon l'invention est configurée pour être membre d'un groupe de diffusion multicast associé au point de raccordement et est adaptée :

- à obtenir les informations à partir d'au moins un message diffusé aux membres dudit groupe de diffusion multicast ; et
- à informer ladite au moins une autre passerelle dans un message diffusé aux membres de ce groupe de diffusion multicast.

De cette sorte, les passerelles membres du groupe de diffusion multicast peuvent communiquer aisément entre elles et s'informer respectivement des réservations en cours qu'elles gèrent.

Avantageusement, le groupe de diffusion multicast peut être un arbre IP multicast, connu de l'homme du métier.

L'utilisation d'un tel arbre de diffusion IP multicast est particulièrement avantageuse lors du passage à l'échelle sur des réseaux de télécommunication de grande dimension, car il permet de n'avoir à gérer qu'une seule adresse IP pour les communications entre les passerelles.

En variante, le groupe de diffusion multicast peut être un groupe de diffusion multicast ATM ou Ethernet.

A titre d'exemple, les informations relatives aux ressources réseau obtenues par la passerelle peuvent comprendre notamment :

- une bande passante disponible sur une interface physique en sortie du point de raccordement pour un ensemble de classes de service supportées par le point de raccordement ; et
- une bande passante disponible sur une interface physique en sortie du point de raccordement pour au moins une classe de service de cet ensemble.

Au sens de l'invention, on entend par «classe de services» un ensemble de services ayant des contraintes similaires en termes de qualité de service, comme par exemple une classe de services sensibles au délai, une classe de services sensibles à la perte, une classe de services sensibles à la gigue, etc.

De cette sorte, les passerelles selon l'invention peuvent réaliser une fonction de contrôle d'accès basée à la fois sur la disponibilité des ressources réseau sur leur lien avec le point de raccordement et sur la disponibilité des ressources réseau sur le lien de raccordement du point de raccordement au réseau.

Elles peuvent vérifier par exemple :

- qu'une bande passante nécessaire pour délivrer le service requis par le terminal est disponible en sortie de la passerelle et en sortie du point de raccordement pour la classe de service associée au service demandé ;
- et qu'une bande passante nécessaire pour délivrer ce service est disponible sur l'interface physique en sortie de la passerelle et en sortie du point de raccordement.

L'invention permet ainsi d'optimiser l'utilisation des ressources au niveau de la passerelle et du point de raccordement au réseau, et de garantir la qualité de service aux applications à forte valeur ajoutée en adaptant le débit autorisé pour chaque classe de service au niveau du point de raccordement.

En réalisant les deux tests précités au niveau de la passerelle d'accès et du point de raccordement, on s'assure que chaque service requis est traité de façon identique, quelle que soit la classe de service auquel il appartient. L'invention permet un contrôle de l'accès équitable : les requêtes d'accès à des services non prioritaires ne sont plus systématiquement refusées, puisqu'un débit spécifique pour ces services (pour la classe de service associée) peut être alloué et testé au niveau de la passerelle. La gestion des services au sein d'une même classe de service et d'une classe de service à l'autre est ainsi optimisée. Le réseau de télécommunications peut ainsi être géré plus efficacement et utilisé au mieux.

En variante, d'autres vérifications peuvent être réalisées pour déterminer si les ressources nécessaires sont suffisantes au niveau du point de raccordement et de la passerelle. Notamment, si le point de raccordement au réseau comporte au sein de son architecture d'autres niveaux de contention que son lien de raccordement au réseau de télécommunications, ils peuvent être modélisés de sorte à être vérifiés au cours de l'étape de vérification. De la même façon, il est possible de transmettre des informations relatives à ces niveaux de contention dans les messages circulant sur le groupe de diffusion.

Dans un mode particulier de réalisation de l'invention, le procédé de traitement comporte en outre :

- une étape d'évaluation, à l'aide des informations :

   ○ des ressources réseau réservées par plusieurs passerelles sur une interface physique en sortie du point de raccordement pour un ensemble de classes de service supportées par le point de raccordement ; et
   ○ des ressources réseau réservées par plusieurs passerelles sur une interface physique en sortie du point de raccordement pour au moins une classe de service de cet ensemble ;

- une étape d'envoi d'au moins un message comprenant l'évaluation de ces ressources réseau réservées, à au moins une autre passerelle connectée au point de raccordement.

Avantageusement, ces étapes peuvent être implémentées par un nombre limité de passerelles connectées au point de raccordement, par exemple par une passerelle dite primaire, et ce, de sorte à limiter la complexité au niveau des autres passerelles.

Dans un mode particulier de réalisation, l'étape d'obtention des informations comprend :

- la réception :

   ○ d'informations relatives aux ressources réseau réservées par plusieurs passerelles sur une interface physique en sortie du point de raccordement pour un ensemble de classes de service supportées par le point de raccordement ;
   ○ d'informations relatives aux ressources réseau réservées par plusieurs passerelles sur une interface physique en sortie du point de raccordement pour au moins une classe de service dudit ensemble ;

- la mise à jour d'une base locale avec ces informations pour consultation lors de ladite vérification.

Les informations reçues sont par exemple les évaluations des ressources réseau envoyées par une passerelle primaire telle que précitée.

En variante, il peut s'agir d'informations reçues du point de raccordement lui-même, si celui-ci est adapté à mesurer ou évaluer ces informations. Notamment, dans un mode particulier de réalisation, l'étape d'obtention des informations comprend :

- la réception d'un message du point de raccordement comprenant :

  ○ une bande passante disponible sur une interface physique en sortie du point de raccordement pour un ensemble de classes de service supportées par le point de raccordement ; et
  ○ une bande passante disponible sur une interface physique en sortie du point de raccordement pour au moins une classe de service de cet ensemble ; et

- la mise à jour d'une base locale avec ces bandes passantes pour consultation lors de l'étape de vérification.

La réception de ces différentes informations (informations relatives aux ressources réseau réservées ou bandes passantes disponibles) permettent aux passerelles conformes à l'invention de mettre à jour une base de données locale de sorte à pouvoir ensuite procéder à l'étape de vérification du procédé de traitement selon l'invention.

La mise à jour peut être de différentes natures. Il peut s'agir de copier les informations reçues dans la base de données locale de la passerelle, car par exemple elles ne sont pas évaluées directement par cette passerelle. En variante, si la passerelle évalue elle-même également ces informations, les informations reçues peuvent permettre à cette passerelle de vérifier que sa propre évaluation est correcte, et le cas contraire de rectifier son évaluation. Ces deux variantes de réalisation seront considérées comme des mises à jour d'une base locale au sens de l'invention.

Dans un mode particulier de réalisation, le procédé de traitement selon l'invention comprend en outre une étape d'envoi périodique par la passerelle connectée au terminal d'un message indiquant les ressources réseau qu'elle réserve pour au moins un service fourni via le point de raccordement à au moins une autre passerelle connectée à ce point de raccordement.

Ainsi, il est possible pour les passerelles recevant ce message périodique de se « re-synchroniser » et de contrôler la validité de leur copie locale de l'évaluation des ressources réservées par la passerelle.

Ceci permet également à ces passerelles de détecter, en cas de non réception de ce message périodique, des réservations fantômes associées à la passerelle, c'est-à-dire des réservations libérées par exemple du fait d'une déconnexion inopinée de la passerelle sans que celle-ci ait eu le temps d'informer les autres passerelles. La gestion des ressources du réseau de télécommunications est ainsi améliorée.

Dans un mode particulier de réalisation de l'invention, le procédé de traitement comprend en outre, pour au moins un équipement tiers reliant la passerelle connectée au terminal au point de raccordement, l'obtention d'informations relatives aux ressources réservées par au moins une autre passerelle connectée à cet équipement pour au moins un service fourni via cet équipement. Dans ce mode de réalisation, au cours de l'étape de vérification, on vérifie en outre à l'aide de ces informations, que ledit au moins un équipement dispose de ressources réseaux nécessaires pour fournir le service, l'étape de réservation des ressources étant mise en oeuvre si la passerelle connectée au terminal, le point de raccordement et ledit au moins un équipement disposent des ressources nécessaires pour fournir le service.

Corrélativement, dans ce mode particulier de réalisation de l'invention, la passerelle d'accès comprend en outre, pour au moins un équipement reliant la passerelle connectée au terminal au point de raccordement, des seconds moyens d'obtention d'informations relatives aux ressources réservées par au moins une autre passerelle reliée à cet équipement pour au moins un service fourni via cet équipement. En outre, les moyens de vérification de la passerelle selon l'invention vérifient également que ledit au moins un équipement dispose de ressources réseau nécessaires pour fournir le service, les moyens de réservation étant adaptés à réserver ces ressources réseau si la passerelle connectée au terminal, le point de raccordement et ledit au moins un équipement disposent des ressources réseau nécessaires pour fournir le service requis par le terminal.

Ceci permet de prendre en compte d'autres points de contention identifiés dans le réseau, comme par exemple au niveau d'un équipement compris entre la passerelle et le point de raccordement. Cet équipement peut être notamment un autre équipement de type DSLAM, dans une architecture où plusieurs DSLAM sont hiérarchisés, c'est-à-dire connectés en cascade avant le point de raccordement au réseau de collecte.

On peut également envisager, dans d'autres modes de réalisation, que le procédé de traitement de l'invention présente en combinaison tout ou partie des caractéristiques précitées.

Dans un mode particulier de réalisation, les différentes étapes du procédé de traitement d'une requête selon l'invention sont déterminées par des instructions de programmes d'ordinateurs.

En conséquence, l'invention vise aussi un programme d'ordinateur sur un support d'informations, ce programme étant susceptible d'être mis en oeuvre dans une passerelle d'accès à un réseau ou plus généralement dans un ordinateur, ce programme comportant des instructions adaptées à la mise en oeuvre des étapes d'un procédé de traitement d'une requête tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur ou encore un moyen d'enregistrement réinscriptible, par exemple une mémoire FLASH.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un second aspect, l'invention vise également un système de contrôle d'admission à au moins un service, ce système comprenant au moins :

- un point de raccordement à un réseau de télécommunications ; et
- une pluralité de passerelles connectées au point de raccordement,

au moins une desdites passerelles étant conforme à l'invention telle que décrite précédemment pour traiter une requête d'accès audit au moins un service émise par un terminal connecté à cette passerelle.

Ainsi, l'invention propose un système de contrôle d'admission à un service réparti sur plusieurs passerelles d'accès, adaptées à communiquer entre elles, par exemple par l'intermédiaire d'un groupe de diffusion multicast tel qu'un arbre IP multicast. Le procédé de contrôle d'admission est ainsi particulièrement robuste et résistant aux pannes susceptibles d'être rencontrées par l'une ou l'autre des passerelles du système selon l'invention.

Dans un mode particulier de réalisation de l'invention, au moins une des passerelles est reliée au point de raccordement par l'intermédiaire d'au moins un autre équipement.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un système de contrôle d'admission conforme à l'invention dans son environnement, dans un mode particulier de réalisation ;
- la figure 2 représente sous forme schématique, une passerelle d'accès conforme à l'invention dans un mode particulier de réalisation ;
- la figure 3 représente sous forme d'organigrammes, les principales étapes mises en oeuvre au cours du procédé de traitement d'une requête selon l'invention, lorsqu'il est mis en oeuvre par une passerelle d'accès conforme à l'invention du système de contrôle d'admission représenté sur la figure 1 ;
- la figure 4 représente de façon schématique les principaux états d'une passerelle conforme à l'invention dans un second mode de réalisation ;
- la figure 5 représente un système de contrôle d'admission conforme à l'invention dans son environnement, dans un troisième mode de réalisation de l'invention.

Description détaillée de plusieurs modes de réalisation

Dans les différents exemples envisagés ici, on se place dans le contexte d'un réseau de télécommunications de type xDSL s'appuyant sur une architecture de réseau de collecte de type ATM (Asynchronous Transfer Mode ou mode de transfert asynchrone) ou Gigabit Ethernet.

Toutefois, l'invention s'applique également à d'autres types de réseaux de télécommunications, tels que par exemple des réseaux de télécommunications optiques basés sur une architecture GPON (Gigabit Passive Optical Network), pour gérer des ressources réseau au niveau des passerelles d'accès, des équipements ONT (Optical Network Terminal) et des équipements OLT (Optical Link Terminal).

Par ailleurs, dans les différents modes de réalisation décrits ici, on contrôle, avant d'autoriser l'accès à un service, la disponibilité de la bande passante sur le lien de sortie de divers équipements (ressources réseau de ces équipements au sens de l'invention). La bande passante considérée peut s'entendre dans le sens montant et/ou dans le sens descendant. Dans la suite de la description, on désignera par bande passante ce qui est offert par un lien physique et par débit ce qui est consommé par un ou plusieurs services (ou applications). De façon connue en soi, un débit et une bande passante s'expriment dans la même unité à savoir en bit/s (ou ses multiples comme par exemple en kbit/s ou en Mbit/s).

Ces hypothèses ne sont cependant en aucun cas limitatives, l'invention pouvant s'appliquer également au contrôle d'autres ressources réseau (notamment en sus de la bande passante), telles que par exemple un taux de perte, un délai de transit, une variation du délai de transit, etc. On peut notamment contrôler, en plus de la bande passante, la contention interne au point de raccordement, comme par exemple un bus partagé.

En outre, dans les différents modes de réalisation décrits ici, on considère comme point de raccordement, un point de raccordement au réseau de collecte du réseau de télécommunications. Bien entendu, l'invention s'applique également à d'autres points de raccordement au réseau de télécommunications, comme par exemple un point de raccordement au réseau coeur du réseau de télécommunications.

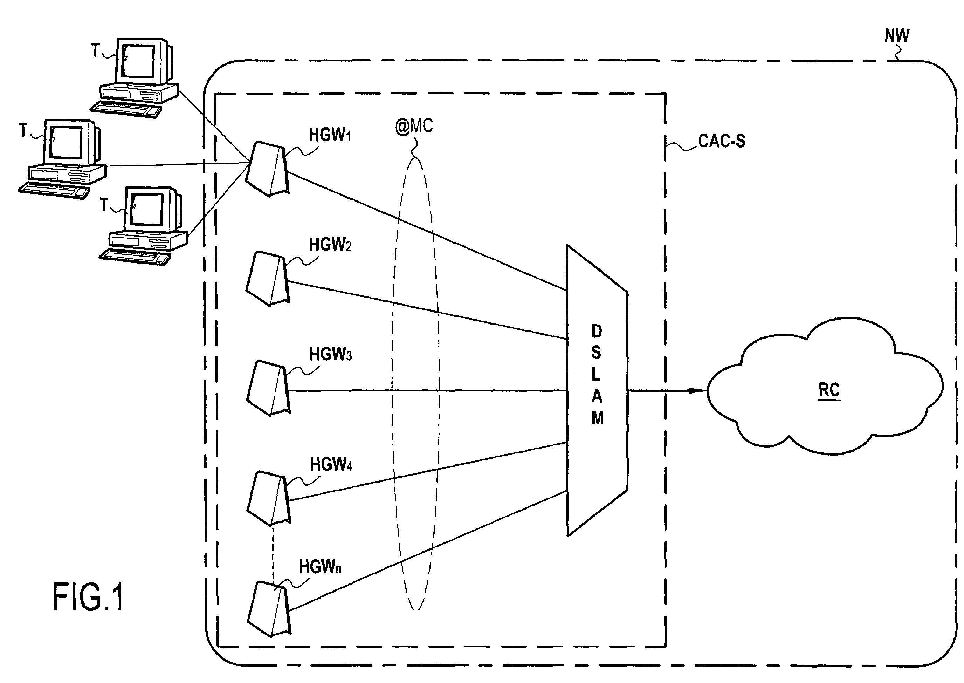

La **figure 1** représente un système de contrôle d'admission CAC-S conforme à l'invention dans un premier mode de réalisation, et implémenté dans un réseau de télécommunications NW de type xDSL. L'invention s'applique bien sûr également à d'autres types de réseaux de télécommunication, comme indiqué précédemment dans ce document.

Conformément à l'invention, le système de contrôle d'admission CAC-S comporte une pluralité de passerelles d'accès HGW$_i$, i=1,..,n, conformes à l'invention. Ces passerelles sont par exemple ici des passerelles résidentielles ou domestiques (ou encore « homegateway » en anglais).

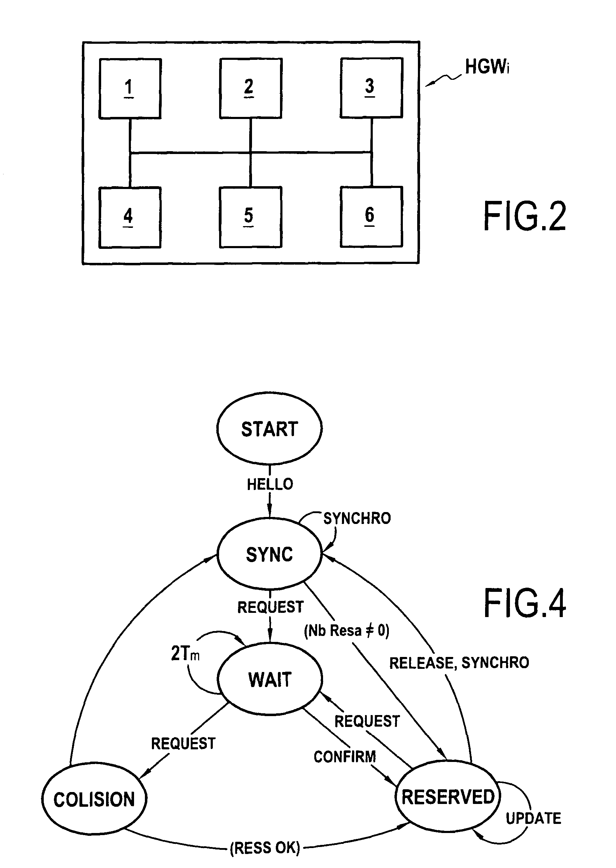

Dans le mode de réalisation décrit ici, chaque passerelle HGW$_i$ selon l'invention a l'architecture matérielle d'un ordinateur telle que représentée sur la **figure 2**.

Elle comporte notamment un processeur 1, une mémoire vive de type RAM 2, une mémoire morte de type ROM 3, une mémoire non volatile réinscriptible de type flash 4, des moyens 5 de communication avec le réseau NW, et des moyens 6 de communication avec les terminaux T (par exemple une interface WiFi ou LAN).

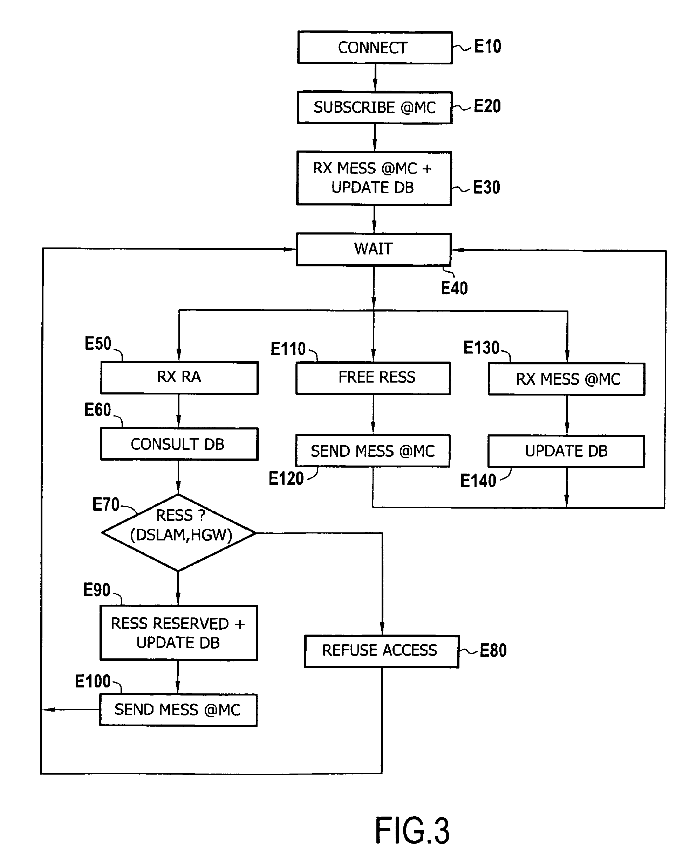

La mémoire morte 3 de type ROM constitue un support d'enregistrement conforme à l'invention sur lequel est enregistré un programme d'ordinateur conforme à l'invention adapté à exécuter les principales étapes du procédé de traitement d'une requête selon l'invention représentées sous forme d'organigramme à la figure 3 décrite ultérieurement.

Les passerelles HGW$_i$ réalisent l'interface entre le réseau de télécommunications NW et un ou plusieurs terminaux T, tels que par exemple des ordinateurs, des téléphones, etc.

Elles sont reliées au réseau de collecte RC du réseau de télécommunications NW par un dispositif DSLAM (point de raccordement au sens de l'invention), équipement du réseau de télécommunications NW connu en soi, et ayant pour fonction principale de récupérer les flux de données transitant sur les lignes téléphoniques auxquelles il est raccordé et de multiplexer ces données pour les diriger vers le réseau de collecte.

On suppose ici que le dispositif DSLAM supporte un nombre prédéterminé K de classes de service, proposées par le réseau de télécommunications NW. Ces classes de service sont par exemple les classes de service spécifiées par l'IETF ou par l'ITU. Elles sont connues de l'homme du métier et ne seront pas détaillées davantage ici.

Dans le premier mode de réalisation décrit ici, le dispositif DSLAM est configuré avec une adresse IP multicast notée @*IP*, dédiée à la fonction de contrôle d'admission selon l'invention. Il fournit, à l'aide de cette adresse, un arbre IP multicast @MC auquel les passerelles HGW$_i$, i=1,..,n sont abonnées. L'ensemble des passerelles abonnées à l'arbre multicast @MC constitue un groupe multicast associé au dispositif DSLAM au sens de l'invention.

De façon connue de l'homme du métier, un tel arbre de diffusion ou de distribution multicast permet à chaque membre d'un groupe d'abonnés à cet arbre, d'émettre et/ou de recevoir des messages via une adresse IP de groupe multicast (chaque membre du groupe utilise cette adresse IP multicast tant qu'il ne quitte pas le groupe). De plus amples détails sur le fonctionnement et la mise en oeuvre des arbres IP multicast (attribution des adresses IP multicast, gestion des abonnements, construction de l'arbre multicast, etc.) sont disponibles notamment dans les documents RFC 966, 1112, 1301, 1458, 2189, 2236, 2627, 2908, 3171, 3228 et 3376 de l'IETF.

L'arbre multicast @MC présente ici la particularité de ne comporter qu'un seul point de réplication, à savoir le dispositif DSLAM lui-même, et n feuilles, à savoir les n passerelles domestiques HGW$_i$. Il est avantageusement configuré ici de sorte à permettre à chaque passerelle domestique HGW$_i$ d'émettre et de recevoir des messages multicast. Ainsi configuré, l'arbre multicast @MC se comporte comme un bus sur lequel chaque membre du groupe d'abonnés à cet arbre peut émettre un message à destination de tous les membres déjà connectés.

Nous allons maintenant décrire, en référence à la **figure 3,** les principales étapes du procédé de traitement d'une requête selon l'invention, lorsqu'elles sont mises en oeuvre par une passerelle domestique HGW$_i$ conforme à l'invention et appartenant au système de contrôle d'admission représenté sur la figure 1. Par la suite, les intitulés des messages de signalisation échangés sur l'arbre de diffusion ne sont donnés qu'à titre illustratif.

Lors du raccordement de la passerelle HGW$_i$ au dispositif DSLAM (étape E10), celle-ci est configurée avec l'adresse IP multicast @*IP* de l'arbre multicast @MC, par le système de gestion de l'opérateur (non représenté sur la figure). Ce système de gestion est par exemple tel que celui décrit dans le document TR-69 du DSL Forum.

Au cours de cette étape de configuration, elle reçoit par ailleurs, ici du système de gestion de l'opérateur :

- les valeurs nominales de bande passante, notées $\Lambda_{\text{DSLAM}}^{\text{CoS}}$ $(j)$, $j$=1,..,K, allouées au niveau du dispositif DSLAM à chaque classe de service $j$ supportée par ce dispositif ;

- la valeur nominale de bande passante offerte par l'interface physique de raccordement du dispositif DSLAM au réseau de collecte RC (i.e. bande passante nominale disponible en sortie du dispositif DSLAM), notée $\Lambda_{\text{DSLAM}}^{\text{PHY}}$ ; et

- les valeurs nominales de bande passante, notées $\Lambda_{\text{HGWi}}^{\text{CoS}}$ $(j)$, $(j)$, $j$=1,..,K, allouées au niveau de la passerelle HGW$_i$ à chaque classe de service $j$.

Par ailleurs, la passerelle HGW$_i$ accède également, au cours de cette étape, à la valeur nominale de la bande passante offerte par l'interface physique de raccordement de la passerelle HGW$_i$ au dispositif DSLAM (i.e. bande passante nominale disponible en sortie de la passerelle HGW$_i$), notée $\Lambda_{\text{HGWi}}^{\text{PHY}}$.

De façon connue de l'homme du métier, cette valeur dépend de la passerelle d'accès considérée, et peut varier notamment en fonction du débit de synchronisation de l'interface ADSL de la passerelle avec le dispositif DSLAM au moment de sa connexion. Ce débit dépend, entre autres, de l'éloignement de la passerelle avec le dispositif DSLAM. L'accès à cette valeur est connu en soi et ne sera pas détaillé davantage ici. Elle est, en général, accessible via le micrologiciel qui gère le composant implémentant l'interface ADSL dans la passerelle.

Il est à noter que les valeurs de bande passante considérées pour les classes de service, à savoir les valeurs $\Lambda_{\text{DSLAM}}^{\text{CoS}}$ $(j)$ et $\Lambda_{\text{HGWi}}^{\text{CoS}}$ $(j)$, $j$=1,..,K, peuvent être exprimées en termes de pourcentages des valeurs de bande passante $\Lambda_{\text{DSLAM}}^{\text{PHY}}$ et $\Lambda_{\text{HGWi}}^{\text{PHY}}$ respectivement. Selon la politique d'allocation retenue en matière de bandes passantes (ou de débits) et de services, ces pourcentages peuvent être recouvrant sur l'ensemble des classes de service, c'est-à-dire que la somme des pourcentages alloués aux différentes classes de service peut être supérieure à 100%.

La passerelle HGW$_i$ s'abonne ensuite à l'arbre multicast @MC associé au dispositif DSLAM en utilisant l'adresse multicast @*IP* obtenue lors de sa configuration (étape E20), par exemple à l'aide du protocole IGMP (Internet Group Management Protocol). L'homme du métier est invité à se référer au document RFC 3376 cité précédemment, pour plus de détails sur les étapes mises en oeuvre par une entité pour s'abonner à un arbre multicast IP.

Une fois abonnée à l'arbre multicast @MC, la passerelle HGW$_i$ émet un message de connexion HELLO destiné notamment à se faire connaître des autres passerelles HGW$_m$, m=1,..,n, m≠i, connectées au dispositif DSLAM et abonnées à l'arbre @MC.

Ce message HELLO permet notamment, à chaque passerelle HGW$_m$, m=1,..,n, m≠i, abonnée à l'arbre multicast @MC, de mettre à jour une base de données locale comprenant une liste des passerelles connectées au dispositif DSLAM et abonnées à l'arbre multicast @MC. En particulier, sur réception de ce message HELLO, les passerelles HGW$_m$ créent dans leurs bases respectives, un nouveau contexte pour la passerelle HGW$_i$. On entend ici par contexte de la passerelle HGW$_i$, un ensemble d'informations associé à cette passerelle et notamment aux ressources réseau qu'elle réserve, comme détaillé ultérieurement.

Suite à l'émission du message HELLO, la passerelle HGW$_i$ reçoit via l'arbre multicast @MC (étape E30), des informations représentatives de l'état des réservations des ressources réseau en cours pour chacune de ces autres passerelles, pour au moins un service fourni via le dispositif DSLAM.

Ces informations sont reçues par exemple dans des messages SYNCHRO, envoyés séparément par chaque passerelle HGW$_m$, m≠i, sur l'arbre @MC, suite à la réception du message HELLO. Chaque message SYNCHRO contient ici le débit réservé par la passerelle à l'origine de ce message pour chaque classe de service $j$, j=1,..,K.

On note $\Lambda_{CoS}(m, j)$ le débit réservé par la passerelle HGW$_m$, pour des requêtes de service associées à la classe de service $j$. Ce débit caractérise également le débit réservé par la passerelle HGW$_m$ au niveau du dispositif DSLAM (et notamment sur son lien de raccordement vers le réseau de collecte), pour des services associés à la classe de service j.

Il est défini par : $$\Lambda_{CoS}(m, j) = \sum_p \Lambda_{req}^{j}(m, p)$$

où $\Lambda_{req}^{j}(m, p)$ désigne le débit associé à la réservation $p$ gérée par la passerelle HGW$_m$ et correspondant à un service de classe $j$.

Sur réception d'un message SYNCHRO d'une passerelle HGW$_m$, la passerelle HGW$_i$ met à jour une base de données locale DB, mémorisée dans sa mémoire volatile réinscriptible 4, en créant, pour cette passerelle HGW$_m$ un contexte comprenant les informations $\Lambda_{cos}(m, j)$.

On notera, qu'au démarrage de la passerelle HGW$_i$, les valeurs $\Lambda_{Cos}(i, j)$ de la passerelle HGW$_i$ pour j=1,..K, sont initialisées à zéro.

Par ailleurs, la passerelle HGW$_i$ stocke également dans la base de données DB, des variables locales représentatives :

- du débit total qu'elle réserve pour l'ensemble des services, noté $\Lambda_{PHY}(i)$ :

$$\Lambda_{PHY}(i) = \sum \Lambda_{CoS}(i, j)$$

- du débit total réservé pour chaque classe de service par l'ensemble des passerelles HGW$_m$, m=1, ..n, et noté $\Lambda_{CoS}(j)$, j=1,..,K ; et
- du débit total réservé par l'ensemble des passerelles HGW$_m$, m=1, ..n, connectées au dispositif DSLAM, noté $\Lambda_{PHY}$.

Ainsi, suite à la réception et au stockage des valeurs $\Lambda_{Cos}(m, j)$, pour m=1,..,n, et j=1..K, la passerelle HGW$_i$ met à jour les variables locales $\Lambda_{PHY}$ et $\Lambda_{Cos}(j)$, (j), j=1,..,K, par exemple à l'aide des équations suivantes :

$$\Lambda_{CoS}(j) = \sum_{m=1}^{n} \Lambda_{CoS}(m, j) \text{ et } \Lambda_{PHY} = \sum_{j=1}^{K} \Lambda_{CoS}(j)$$

La passerelle HGW$_i$ se met ensuite en attente (étape E40) d'au moins l'un quelconque de ces événements :

- réception d'une requête d'accès RA d'un terminal T lié à la passerelle ;
- libération de ressources réservées par la passerelle ;
- réception d'un message sur l'arbre multicast @MC relatif à l'état des réservations des ressources réseau réservées par les autres passerelles.

Sur réception d'une requête d'accès RA émise par un terminal T connecté à la passerelle HGW$_i$ (étape E50), la passerelle HGW$_i$ consulte sa base de données DB (étape E60) pour vérifier si les ressources réseau nécessaires pour fournir ce service sont disponibles, d'une part à son propre niveau, c'est-à-dire ici sur son lien de raccordement au dispositif DSLAM, et d'autre part, au niveau du dispositif DSLAM, c'est-à-dire ici sur le lien de raccordement du dispositif DSLAM au réseau de collecte RC.

On suppose que le service demandé dans la requête RA appartient à la classe de service *c* et on note $\Lambda_{req}$ le débit nécessaire pour fournir ce service.

La passerelle HGW$_i$ vérifie notamment (étape E70) si les quatre conditions suivantes sont respectées, à l'aide des informations mémorisées dans sa base de données DB :

- disponibilité des ressources au niveau de la passerelle HGW$_i$ :

$$\Lambda_{req} + \Lambda_{CoS}(i, c) \leq \Lambda_{HGWi}^{CoS}(c) \quad (Eq. 1)$$

$$\Lambda_{req} + \Lambda_{PHY}(i) \leq \Lambda_{HGWi}^{PHY} \quad (Eq. 2)$$

- disponibilité des ressources au niveau du dispositif DSLAM :

$$\Lambda_{req} + \Lambda_{CoS}(c) \leq \Lambda_{DSLAM}^{CoS}(c) \quad (Eq. 3)$$

$$\Lambda_{req} + \Lambda_{PHY} \leq \Lambda_{DSLAM}^{PHY} \quad (Eq. 4)$$

Si l'une au moins de ces conditions n'est pas vérifiée, alors la passerelle d'accès domestique HGW$_i$ refuse l'accès au service par le terminal T (étape E80).

Si toutes les conditions sont vérifiées, alors la passerelle HGW$_i$ réserve les ressources réseau nécessaires pour fournir le service requis par le terminal T (étape E90).

En outre, elle met à jour, dans sa base de données, les variables représentatives de cette réservation, avec les débits consommés par cette réservation, c'est-à-dire :

$$\Lambda_{CoS}(i,c) \leftarrow \Lambda_{CoS}(i,c) + \Lambda_{req}$$

$$\Lambda_{PHY}(i) \leftarrow \Lambda_{PHY}(i) + \Lambda_{req}$$

$$\Lambda_{CoS}(c) \leftarrow \Lambda_{CoS}(c) + \Lambda_{req}$$

$$\Lambda_{PHY} \leftarrow \Lambda_{PHY} + \Lambda_{req}$$

Les autres variables restent inchangées.

La passerelle $HGW_i$ informe ensuite les autres passerelles de cette réservation en envoyant sur l'arbre multicast @MC un message contenant les valeurs de débit mises à jour qu'elle consomme, à savoir $A_{CoS}(i, j)$, pour j=1,...K et $A_{PHY}(i)$ (étape E100).

Ce message est par exemple un message UPDATE ou SYNCHRO. Il est reçu simultanément par toutes les passerelles d'accès reliées au dispositif DSLAM et abonnées à l'arbre de diffusion multicast @MC, qui peuvent ensuite mettre à jour leurs propres bases de données locales avec ces valeurs. Il contient par ailleurs également, dans ce premier mode de réalisation, les valeurs locales mises à jour par la passerelle $HGW_i$ des variables $\Lambda_{CoS}(j)$ pour j=1,...K et $\Lambda_{PHY}$.

Une fois le service délivré au terminal T par le réseau de télécommunications NW, les ressources réseau allouées à ce service sont libérées par la passerelle $HGW_i$ (étape E110).

La passerelle $HGW_i$ met alors à jour sa base de données DB (à savoir, le service appartenant à la classe de service $c$, les variables $\Lambda_{CoS}(i, c)$, $\Lambda_{PHY}(i)$, $\Lambda_{CoS}(c)$ et $\Lambda_{PHY}$ en soustrayant la valeur $\Lambda_{req}$) (étape E120).

Elle émet ensuite un message sur l'arbre multicast @MC, par exemple un message RELEASE, afin d'informer les autres passerelles de la disponibilité de ces ressources réseau précédemment réservées pour le service. Ce message comprend, dans le premier mode de réalisation décrit ici, les valeurs à jour des variables $\Lambda_{CoS}(i, c)$, $\Lambda_{PHY}(i)$, $\Lambda_{CoS}(c)$ et $\Lambda_{PHY}$.

Sur réception d'un message UPDATE ou SYNCHRO émis sur l'arbre multicast @MC par une autre passerelle $HGW_x$ ($x \neq i$) connectée au dispositif DSLAM, faisant état d'une réservation de ressources réseau pour un service associé à une classe de service s par cette passerelle (étape E130), et comprenant notamment les (nouveaux) débits $\Lambda_{CoS}(x, s)$ et $\Lambda_{PHY}(x)$ consommés par la passerelle $HGW_x$, la passerelle $HGW_i$ met à jour sa base de données (étape E140) avec ces valeurs.

Par ailleurs, comme mentionné précédemment, dans le premier mode de réalisation décrit ici, chaque message UPDATE ou SYNCHRO comprend en outre les valeurs locales, tenues à jour par la passerelle $HGW_x$, des variables $\Lambda_{CoS}(s)$ et $\Lambda_{PHY}$. Ainsi, sur réception d'un tel message, la passerelle $HGW_i$ vérifie également les nouvelles valeurs des variables locales $\Lambda_{CoS}(s)$ et $\Lambda_{PHY}$ selon, par exemple, les équations suivantes (mise à jour au sens de l'invention) :

$$\Lambda_{CoS}(s) \equiv \sum_{m=1}^{n} \Lambda_{CoS}(m, s) \ \text{ et } \ \Lambda_{PHY} \equiv \sum_{m=1}^{n} \Lambda_{PHY}(m)$$

De même, sur réception d'un message RELEASE émis sur l'arbre multicast @MC par une autre passerelle $HGW_x$ ($x \neq i$) connectée au dispositif DSLAM, faisant état d'une libération de ressources réseau pour un service associé à une classe de service $s$ par cette passerelle (étape E130), et comprenant notamment les nouveaux débits $\Lambda_{CoS}(x, s)$ et $\Lambda_{PHY}(x)$ consommés par la passerelle $HGW_x$, la passerelle $HGW_i$ met à jour sa base de données (étape E140) avec ces valeurs.

Par ailleurs, comme décrit précédemment, dans le premier mode de réalisation décrit ici, chaque message RELEASE comprend en outre les valeurs locales, tenues à jour par la passerelle $HGW_x$, des variables $\Lambda_{CoS}(s)$ et $\Lambda_{PHY}$. Ainsi, sur réception d'un tel message, la passerelle $HGW_i$ vérifie également les nouvelles valeurs des variables locales $\Lambda_{CoS}(s)$ et $\Lambda_{PHY}$ selon, par exemple, les équations suivantes (mise à jour au sens de l'invention) :

$$\Lambda_{CoS}(s) \equiv \sum_{m=1}^{n} \Lambda_{CoS}(m, s) \quad \text{et} \quad \Lambda_{PHY} \equiv \sum_{m=1}^{n} \Lambda_{PHY}(m)$$

Lorsqu'une passerelle ne consomme plus aucune ressource, elle envoie un message UPDATE ou SYNCHRO sur l'arbre multicast @MC avec les valeurs de débit positionnées à 0 puis cesse d'émettre des messages UPDATE ou SYNCHRO.

Chaque passerelle $HGW_i$ envoie également, à intervalles réguliers (correspondant à une période $T_{ref}$), sur l'arbre multicast @MC, un message UPDATE ou SYNCHRO pour informer les autres passerelles de la quantité de ressources réseau qu'elle utilise pour la gestion de ses réservations en cours.

Ceci a pour but de permettre à chaque passerelle recevant ce message de se (re)synchroniser aisément, et notamment de vérifier que la passerelle $HGW_i$ utilise bien les ressources reportées dans la base de données locale de la passerelle (mise à jour au sens de l'invention).

Ce mécanisme permet ainsi d'éviter les réservations « fantômes », c'est-à-dire les réservations reportées dans la base de données locale d'une passerelle mais qui n'existent plus en pratique, et qui finiraient par consommer toute la bande passante sans la possibilité de la libérer. Ce mécanisme est connu de l'homme du métier sous le terme de « Graceful state release » et implémente ainsi une surveillance des réservations en cas de problème, comme l'arrêt électrique brutal d'une passerelle $HGW_i$ sans qu'elle n'ait eu matériellement le temps d'émettre un message RELEASE.

Toutes les autres passerelles $HGW_m$ ($m \neq i$) effectuent alors une libération des ressources consommées par la passerelle $HGW_i$ (assimilé à la réception d'un message RELEASE implicite), si elles n'ont pas reçu un message UPDATE ou SYNCHRO au bout d'un temps $T_{ref}$.

La diffusion d'un tel message à intervalles réguliers permet également à une passerelle venant de se connecter au dispositif DSLAM de mettre à jour sa base de données locale (cf. étape E30).

On notera par ailleurs, que la réception d'un message HELLO émis par une passerelle venant de se connecter au dispositif DSLAM, peut permettre également de lutter contre les réservations « fantômes ».

En effet, sur réception d'un message HELLO émis par une passerelle $HGW_i$, une passerelle $HGW_m$ :

- crée un nouveau contexte dans sa base de données locale pour la passerelle $HGW_i$, si aucun contexte associé à la passerelle $HGW_i$ n'existe dans la base ; ou
- réinitialise (i.e. met à zéros) les variables locales de débit associées à la passerelle $HGW_i$, si un contexte existe pour la passerelle $HGW_i$ dans la base locale.

Ainsi, en cas d'arrêt brutal de la passerelle $HGW_i$ sans que celle-ci n'ait eu le temps d'envoyer un message RELEASE, les autres passerelles peuvent mettre à jour leur base locale dés reconnexion de la passerelle $HGW_i$ au dispositif DSLAM et envoi d'un message HELLO après abonnement à l'arbre multicast @MC.

Dans une variante de réalisation, afin de gérer les collisions pouvant être rencontrées au cours de la réservation des ressources, lorsque toutes les conditions sont vérifiées à l'étape E70, la passerelle $HGW_i$ envoie sur l'arbre multicast @MC un message REQUEST contenant sa réservation. Toutes les autres passerelles recevant ce message vont alors mettre à jour leurs bases de données locales respectives.

Si, au bout d'un temps égal à $2*T_m$ ($T_m$ prédéterminé), nécessaire à la propagation de la requête de réservation REQUEST de la passerelle $HGW_i$ et à sa prise en compte par les autres passerelles, la passerelle $HGW_i$ ne reçoit aucune requête de réservation de la part d'une autre passerelle, alors la passerelle $HGW_i$ confirme sa réservation en émettant un message CONFIRM avec les valeurs de débit qu'elle consomme, à savoir avec les valeurs $\Lambda_{CoS}(i, j)$ et $\Lambda_{PHY}(i)$, et également, dans le premier mode de réalisation décrit ici, les valeurs des variables $\Lambda_{CoS}(j)$ *et* $\Lambda_{PHY}$ pour j=1,..K.

Si toutefois, deux ou plusieurs passerelles émettent simultanément un message REQUEST, une collision sera alors détectée par la passerelle $HGW_i$ avant un temps égal à $2*T_m$. Si les ressources ne sont pas suffisantes pour fournir ces requêtes simultanément, alors dans cette variante, toutes les requêtes sont annulées. Chaque passerelle peut réémettre sa requête après un temps aléatoire.

Le temps $T_m$ pourra être choisi de sorte à représenter le temps de propagation maximal des messages sur l'arbre multicast, c'est-à-dire :

$$T_m = Tpu + Tpd + Tr$$

*Tpu* représentant le temps de propagation dans le sens montant, *Tpd* le temps de propagation dans le sens descendant et *Tr* le temps de réplication du paquet IP multicast dans le dispositif DSLAM. A titre indicatif, sur une liaison xDSL, *Tpu= Tpd= Tp >> Tr*, soit $T_m = 2 * Tp \approx 160ms$.

Dans un second mode de réalisation de l'invention, on considère en outre, parmi les passerelles d'accès HGW$_m$, m=1,..n, connectées au dispositif DSLAM et décrites précédemment, une passerelle dite primaire et éventuellement une passerelle dite secondaire. Le processus de sélection de ces passerelles peut être basé notamment sur l'adresse MAC ou IP des passerelles d'accès. Par exemple, on sélectionne comme passerelle primaire la passerelle ayant la plus petite ou la plus grande adresse MAC.

Le fonctionnement des autres passerelles est similaire à celui décrit précédemment dans le premier mode de réalisation.

La passerelle primaire a pour rôle supplémentaire (en plus de mettre en oeuvre le procédé de traitement d'une requête selon l'invention), d'émettre à intervalles réguliers un message de synchronisation SYNCHRO (par exemple à chaque intervalle de temps T$_{ref}$ multiple de $T_m$). Ce message contient, dans le mode de réalisation décrit ici, les valeurs à jour des variables $\Lambda_{CoS}(j)$ et $\Lambda_{PHY}$ reflétant respectivement le débit total réservé par les passerelles HGW$_i$, i=1,..,n connectées au dispositif DSLAM et le débit total réservé par les passerelles HGW$_i$, i=1,..,n pour chaque service *j*, j=1,..,K.

Sur réception de ces valeurs, chaque passerelle se re-synchronise, i.e. met à jour et/ou vérifie sa base de données locale.

Dans une variante de réalisation, la passerelle primaire envoie, dans le message SYNCHRO, les valeurs de bande passante disponibles dans chaque classe de service *j*, j=1,..K, ainsi que la valeur de bande passante disponible sur l'interface physique en sortie du dispositif DSLAM. Ces valeurs sont calculées par la passerelle primaire en soustrayant la valeur $\Lambda_{PHY}$, respectivement les valeurs $\Lambda_{CoS}(j)$, à la valeur nominale $\Lambda_{DSLAM}^{PHY}$, respectivement aux valeurs nominales $\Lambda_{DSLAM}^{CoS}(j)$ reçues par la passerelle primaire au moment de sa configuration par le système de gestion de l'opérateur. Du point de vue d'une passerelle conforme à l'invention, les valeurs de débit disponibles dans chaque classe de service et sur l'interface physique en sortie du dispositif DSLAM donnent une indication de la bande passante réservée par les différentes passerelles connectées au dispositif DSLAM ($\Lambda_{DSLAM}^{phy}$ et $\Lambda_{DSLAM}^{CoS}(j)$ étant connues de chaque passerelle). Par conséquent, il s'agit également à proprement parler d'informations représentatives des ressources réseau réservées par des passerelles connectées au dispositif DSLAM au sens de l'invention. De façon équivalente, chaque passerelle peut stocker dans sa base de données ces valeurs en remplacement (ou en sus) des valeurs $\Lambda_{CoS}(j)$ et $\Lambda_{PHY}$ et s'en servir à l'étape E70, moyennant l'adaptation des équations (Eq.1) à (Eq.4), pour vérifier qu'une bande passante nécessaire pour fournir le service requis par le terminal est disponible en sortie de la passerelle et en sortie du dispositif DSLAM pour une classe de service associée au service requis par le terminal et qu'une bande passante nécessaire pour fournir ce service est disponible sur l'interface physique en sortie de la passerelle et en sortie du dispositif DSLAM.

La passerelle secondaire surveille la passerelle primaire et en cas de disparition de celle-ci (détectée par exemple car aucune trame de synchronisation SYNCHRO n'a été détectée pendant un temps égal à 2*T$_{ref}$), elle devient passerelle primaire et déclenche le processus d'élection d'une nouvelle passerelle secondaire.

Par ailleurs, sur réception d'un message CONFIRM, UPDATE ou RELEASE envoyé par une passerelle HGW$_m$ sur l'arbre multicast @MC, la passerelle primaire mémorise la consommation en termes de bande passante de la passerelle HGW$_m$ et met à jour sa base de données locale comme décrit précédemment. En cas de non réception d'un message CONFIRM ou UPDATE avant un intervalle T$_{ref}$ d'une passerelle ayant émis un message de réservation REQUEST, la passerelle primaire invalide la réservation. Le message RELEASE quant à lui n'est pas confirmé mais la passerelle primaire peut valider le nouvel état en envoyant un nouveau message SYNCHRO.

En outre, si la passerelle primaire détecte qu'une passerelle ne consomme plus de ressources, la passerelle primaire la retire de la liste des passerelles à surveiller.

La passerelle secondaire effectue les mêmes calculs et mises à jour que la passerelle primaire de sorte à pouvoir prendre le relais de la passerelle primaire instantanément en cas de besoin.

On notera, que dans ce second mode de réalisation de l'invention, seule la passerelle primaire (et éventuellement la passerelle secondaire) est adaptée à envoyer des messages SYNCHRO. Par ailleurs, dans ce second mode de réalisation, il n'est pas nécessaire que les passerelles incluent dans les messages RELEASE, CONFIRM et UPDATE, les valeurs des variables $\Lambda_{CoS}(j)$ et $\Lambda_{PHY}$ issues de leur base de données locales, ces valeurs étant évaluées et envoyées à intervalles de temps réguliers par la passerelle primaire, dans le message SYNCHRO.

La **figure 4** résume de façon schématique les principaux messages de signalisation échangés entre les passerelles et les états principaux pouvant être pris par une passerelle HGW$_i$ du système 1 conforme à l'invention dans ce second mode de réalisation.

L'état START fait référence à l'état de la passerelle HGW$_i$ lors de sa connexion au dispositif DSLAM. Le message HELLO est le message émis par la passerelle après s'être abonnée à l'arbre multicast @MC associé au dispositif DSLAM.

L'état SYNC fait référence à un état de synchronisation dans lequel se trouve la passerelle $HGW_i$ lors de la réception de trames SYNCHRO ou RELEASE.

Un message SYNCHRO est un message émis à intervalle régulier $T_{ref}$ par la passerelle primaire ou secondaire afin de synchroniser toutes les passerelles et de leur permettre de mettre à jour leurs bases de données locales.

Ce message contient le débit total réservé par les passerelles $HGW_m$ reliées au dispositif DSLAM, et le débit total réservé par ces passerelles pour chaque service.

En variante, il peut contenir les bandes passantes disponibles en sortie du dispositif DSLAM par classe de service ainsi que la bande passante totale disponible en sortie du dispositif DSLAM.

Dans une autre variante encore (cf. premier mode de réalisation), lorsqu'il n'y a pas de passerelles primaire et secondaire, ce message peut contenir en outre le débit total réservé par la passerelle à l'origine du message ainsi que le débit réservé par cette passerelle pour chaque classe de service.

Si la passerelle $HGW_i$ a des réservations en cours ($NbResa \neq 0$), dans ce cas elle passe de l'état SYNC à un état RESERVED, et émet à intervalles réguliers $T_{ref}$ un message UPDATE sur l'arbre multicast @MC contenant les débits qu'elle réserve pour chaque classe de service ainsi que le débit total réservé.

Suite à l'émission d'un message REQUEST sur l'arbre multicast @MC pour informer les autres passerelles d'une réservation souhaitée par la passerelle $HGW_i$ (le message REQUEST contient le débit souhaité et la classe de service), celle-ci passe dans un état d'attente WAIT et active un compteur à l'aide d'une horloge non représentés sur la figure 1.

Si aucun message REQUEST n'est reçu par la passerelle durant un intervalle de temps égal à $2*T_m$, alors la passerelle confirme sa réservation préalablement sollicitée à l'aide d'un message CONFIRM, et passe dans un état RESERVED.

Sinon, la passerelle $HGW_i$ passe dans un état COLLISION. Si suffisamment de ressources sont disponibles au niveau du dispositif DSLAM pour supporter les requêtes simultanées émises, alors la passerelle $HGW_i$ passe dans un état RESERVED, sinon dans un état SYNC.

Les états et les messages considérés dans les modes de réalisation décrits précédemment représentent des exemples de réalisation et ne sont en aucun cas limitatifs. D'autres variantes pourraient être envisagées. Par exemple :

- On peut considérer une variante dans laquelle il n'y a pas de passerelles primaire et secondaire, ni de message SYNCHRO. Les messages UPDATE servent toujours à resynchroniser l'ensemble des passerelles connectées au dispositif DSLAM mais chaque passerelle insère en plus de sa consommation la vue locale des ressources du dispositif DSLAM. La re-synchronisation s'effectue localement selon le même procédé que celui décrit précédemment. Chaque passerelle surveille ainsi les autres.

- Dans une autre variante, les messages CONFIRM et REQUEST sont remplacés par un message UPDATE annonçant la nouvelle consommation de la passerelle. Un message SYNCHRO peut être envoyé pour confirmer ou infirmer la réservation, et/ou pour confirmer ou infirmer une libération des ressources soit par la passerelle primaire soit par la passerelle qui a émis la requête initiale ou libéré les ressources.

- Dans une autre variante encore, le dispositif DSLAM mesure en permanence le débit utilisé dans chaque classe de service sur le lien de raccordement vers le réseau de collecte BB. A cette fin, le dispositif DSLAM se base notamment sur l'état de ses buffers sur l'interface de sortie ou sur une mesure effectuée sur son interface de sortie et accessible via son système de gestion, telle que par exemple le nombre de paquets ou d'octets écoulés depuis 5 minutes ou 30 secondes. Il diffuse alors à intervalles réguliers (par exemple $T_{ref}$), sur l'arbre multicast @MC en direction des passerelles, cette information dans un message SYNCHRO. Ainsi, dans cette variante, le dispositif DSLAM joue le rôle de la passerelle primaire. Les passerelles se servent de l'information contenue dans le message SYNCHRO pour effectuer l'admission d'appel et/ou mettre à jour la bande passante restante dans chaque classe de service supportée par le DSLAM.

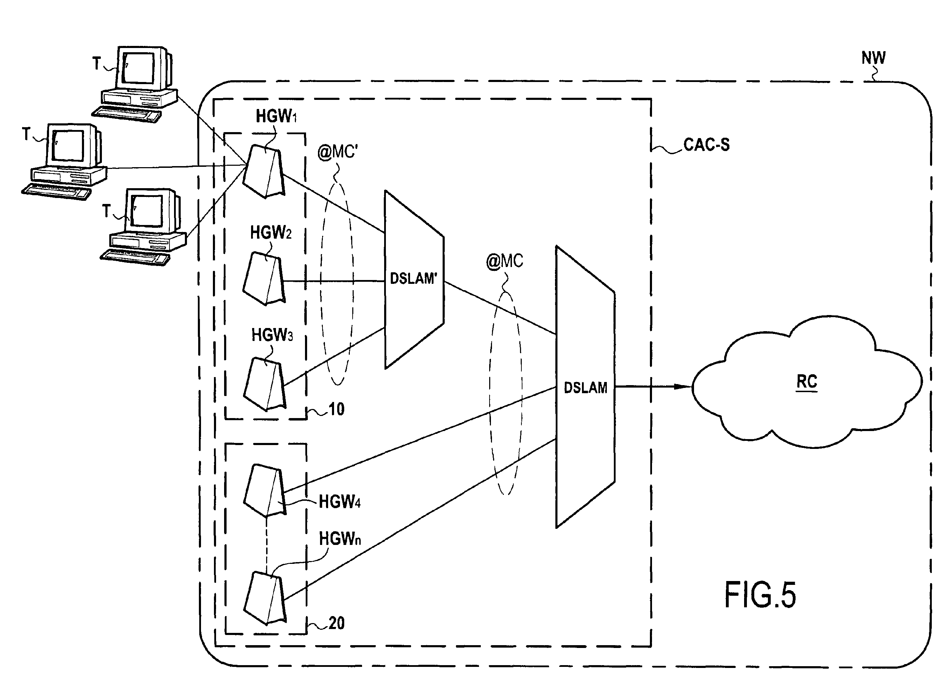

Nous allons maintenant décrire, en référence à la **figure 5,** un troisième mode de réalisation de l'invention, dans lequel d'autres points de contention de la boucle locale que la passerelle d'accès et le point de raccordement sont contrôlés par la passerelle d'accès selon l'invention avant d'autoriser l'accès à un service par un terminal T.

Dans ce troisième mode de réalisation, on suppose qu'au moins une passerelle parmi les passerelles du système CAC-S, à savoir ici les passerelles $HGW_1$, $HGW_2$ et $HGW_3$, sont connectées au dispositif DSLAM par l'intermédiaire d'au moins un autre équipement.

Dans l'exemple décrit ici, on considère un seul autre équipement, qui est par exemple un second dispositif DSLAM noté DSLAM'. Le dispositif DSLAM' est configuré avec une adresse IP multicast notée @*IP'*, dédiée à la fonction de contrôle d'admission selon l'invention. Il fournit, à l'aide de cette adresse, un arbre IP multicast @MC' auquel les passerelles $HGW_1$, $HGW_2$ et $HGW_3$ sont abonnées.

Ainsi, dans cet exemple, le procédé selon l'invention permet de gérer la ligne de cuivre (lien entre la passerelle et le dispositif DSLAM'), le lien vers le réseau de collecte (lien entre le dispositif DSLAM et le réseau de collecte RC), et le lien entre les dispositifs DSLAM et DSLAM'.

En variante, il est possible de considérer une pluralité d'équipements entre la passerelle et le point de raccordement au réseau de collecte RC (et les points de contention qui leur sont associés), comme par exemple plusieurs dispositifs de type DSLAM connectés en cascade avant le point de raccordement au réseau de collecte (hiérarchisation de plusieurs DSLAM), chaque équipement étant configuré avec sa propre adresse IP multicast et fournissant aux passerelles qui lui sont reliées un arbre multicast.

Le fonctionnement des passerelles $HGW_4$,...,$HGW_n$ et du dispositif DSLAM est identique à celui décrit dans les deux modes de réalisation précédents.

Le fonctionnement des passerelles $HGW_1$, $HGW_2$ et $HGW_3$ est également similaire, hormis le fait que ces passerelles émettent des messages d'information de leurs réservations en cours et reçoivent des messages relatifs aux ressources réservées par les autres passerelles, d'une part sur l'arbre multicast @MC et d'autre part sur l'arbre multicast @MC'.

Par ailleurs, au cours de l'étape E70, elles vérifient, pour un service donné requis par le terminal :

- qu'une bande passante nécessaire pour fournir ce service est disponible en sortie de la passerelle, en sortie du dispositif DSLAM' et en sortie du dispositif DSLAM, pour la classe de service associée à ce service ;
- qu'une bande passante nécessaire pour fournir ce service est disponible sur l'interface physique en sortie de la passerelle, en sortie du dispositif DSLAM' et en sortie du dispositif DSLAM.

Ainsi, de manière générale, si on considère CG points de congestion (ou contention) entre une passerelle $HGW_i$ et le point de raccordement au réseau de collecte (CG≥2, et dans l'exemple de la figure 5, CG=3), et que l'ensemble G(g), pour g=1,..,CG, désigne les passerelles contribuant à la congestion du lien de niveau g, un service requis par un terminal liée à la passerelle et appartenant à une classe de service c sera accepté par la passerelle si on vérifie, pour les CG points de congestion auxquels participe la passerelle, les deux inégalités suivantes (en utilisant les notations introduites précédemment) :

$$\sum_{m\in G(g)}\sum_{j}\Lambda_{req}^{c}(m,j)\le \Lambda_{g}^{CoS}(c) \text{ et } \sum_{m\in G(g)}\sum_{j}\Lambda_{req}(m,j)\le \Lambda_{g}^{PHY}$$

où $\Lambda_{g}^{CoS}(c)$ et $\Lambda_{g}^{PHY}$ désignent respectivement le débit alloué à la classe de service c sur le lien de niveau *g* contrôlé et le débit physique du lien de niveau *g* contrôlé, $\Lambda_{req}^{c}(m,j)$ désigne le débit associé à la réservation *j* gérée par la passerelle $HGW_m$ et correspondant à un service de classe c et $\Lambda_{req}(m,j)$ désigne le débit associé à la réservation *j* gérée par la passerelle $HGW_m$ (cette réservation *j* correspondant à une classe de service quelconque parmi les classes de service supportées).

Dans les divers modes de réalisation décrits précédemment, on suppose que l'ensemble des passerelles $HGW_i$ connectées au dispositif DSLAM sont configurées à l'aide de l'adresse IP associée à cet arbre multicast et sont abonnées à cet arbre. Il en est de même, dans le troisième mode de réalisation pour le dispositif DSLAM'. Ainsi, la fonction de contrôle d'admission mise en oeuvre par une passerelle $HGW_i$ conforme à l'invention prend en compte les réservations gérées par l'ensemble des passerelles $HGW_i$ connectées au dispositif DSLAM (et éventuellement au dispositif DSLAM' dans le troisième mode de réalisation).

Cette hypothèse n'est toutefois pas limitative. En effet, dans une variante de réalisation correspondant à un mode de fonctionnement sous-optimal par rapport aux modes de réalisation précédemment décrits, seul un sous-ensemble de passerelles parmi les passerelles connectées au dispositif DSLAM (respectivement DSLAM') sont configurées avec l'adresse @*IP* associée à l'arbre IP multicast @MC (respectivement avec l'adresse @*IP*' associé à l'arbre IP multicast @MC') et abonnées à cet arbre. Ainsi, dans cette variante, seules les réservations gérées par le sous-ensemble de passerelles abonnées aux arbres multicast seront prises en compte lors de la mise en oeuvre du procédé de traitement d'une requête selon l'invention.

De façon similaire, dans les modes de réalisation décrits ici, on prend en compte l'ensemble des classes de service supportées par le point de raccordement considéré au réseau de télécommunications (ex. dispositif DSLAM). En variante, seul un sous-ensemble de cet ensemble de classes de service peut être considéré lors de la mise en oeuvre du procédé de traitement d'une requête selon l'invention.

L'invention permet ainsi de gérer toutes les contentions pouvant se présenter entre les passerelles et le lien de raccordement au réseau de collecte d'un réseau de télécommunications, à savoir notamment les contentions sur la ligne de cuivre entre la passerelle et le DSLAM et les contentions sur le lien de raccordement du DSLAM au réseau de collecte). Cette solution peut être avantageusement appliquée à divers services tels que :

- la diffusion des chaines de télévision en multicast hiérarchique (toutes les chaines du bouquet ne sont pas acheminées aux DSLAM, seules les plus regardées le sont, les autres chaines l'étant en fonction des demandes et des ressources) ;
- la vidéo à la demande, de façon similaire ;
- la voix sur IP afin d'optimiser le remplissage du conduit « voix » en sortie du DSLAM tout en offrant une excellente qualité de service.

**Revendications**

1. Procédé de traitement d'une requête d'accès à un service émise par un terminal (T), ledit procédé étant mis en oeuvre par une passerelle (HGW$_i$) connectée au terminal et à un point de raccordement (DSLAM) à un réseau de télécommunications (NW),
ledit procédé de traitement étant **caractérisé en ce qu'**il comprend les étapes suivantes :

   - obtention (E30,E60,E130) d'informations relatives à des ressources réseau réservées par au moins une autre passerelle connectée à ce même point de raccordement, pour au moins un service fourni via ce point de raccordement ;
   - vérification (E70), à l'aide au moins de ces informations, qu'au moins la passerelle connectée au terminal et le point de raccordement disposent de ressources réseau nécessaires pour fournir le service ;
   - si tel est le cas :

      o réservation (E90) de ces ressources réseau ; et
      o information (E100) d'au moins une autre passerelle connectée au point de raccordement pour au moins un service fourni via ce point de raccordement de cette réservation ;

   - sinon, rejet (E80) de l'accès au service.

2. Procédé de traitement d'une requête selon la revendication 1, **caractérisé en ce que** lors de ladite étape d'obtention (E130), lesdites informations sont reçues à partir d'au moins un message diffusé aux membres d'un groupe de diffusion multicast associé au point de raccordement et auquel appartient ladite passerelle,
et **en ce que**, lors de ladite étape d'information (E100), ladite au moins une autre passerelle est informée dans un message diffusé auxdits membres dudit groupe de diffusion multicast.

3. Procédé de traitement d'une requête selon la revendication 1, **caractérisé en ce qu'**il comporte :

   - une étape d'évaluation, à l'aide desdites informations :

      o des ressources réseau réservées par plusieurs passerelles sur une interface physique en sortie du point de raccordement pour un ensemble de classes de service supportées par le point de raccordement ; et
      o des ressources réseau réservées par plusieurs passerelles sur une interface physique en sortie du point de raccordement pour au moins une classe de service dudit ensemble ;

   - une étape d'envoi d'au moins un message comprenant l'évaluation de ces ressources réseau réservées, à au moins une autre passerelle connectée audit point de raccordement.

4. Procédé de traitement selon la revendication 3 **caractérisé en ce que** ladite étape d'envoi est mise en oeuvre périodiquement, selon une période déterminée.

5. Procédé de traitement d'une requête selon la revendication 1, **caractérisé en ce que** l'obtention desdites informations comprend :

   - la réception :

      o d'informations relatives aux ressources réseau réservées par plusieurs passerelles sur une interface physique en sortie du point de raccordement pour un ensemble de classes de service supportées par le point de raccordement ;

o d'informations relatives aux ressources réseau réservées par plusieurs passerelles sur une interface physique en sortie du point de raccordement pour au moins une classe de service dudit ensemble ; et

- la mise à jour d'une base locale avec ces informations pour consultation lors de ladite vérification.

**6.** Procédé de traitement d'une requête selon la revendication 1, **caractérisé en ce qu'**il comporte en outre une étape d'envoi périodique par ladite passerelle connectée audit terminal d'un message indiquant les ressources réseau qu'elle réserve pour au moins un service fourni via le point de raccordement à au moins une autre passerelle connectée audit point de raccordement.

**7.** Procédé de traitement d'une requête selon la revendication 1, **caractérisé en ce que** les informations relatives aux ressources réseau comprennent :

- une bande passante disponible sur une interface physique en sortie du point de raccordement pour un ensemble de classes de service supportées par le point de raccordement ; et
- une bande passante sur une interface physique en sortie du point de raccordement pour au moins une classe de service dudit ensemble.

**8.** Procédé de traitement d'une requête selon la revendication 7, **caractérisé en ce que** l'obtention desdites informations comprend :

- la réception d'un message du point de raccordement comprenant ladite bande passante disponible pour un ensemble de classes de service et ladite bande passante disponible pour au moins une classe de service ; et
- la mise à jour d'une base locale avec ces bandes passantes pour consultation lors de ladite vérification.

**9.** Procédé de traitement d'une requête selon la revendication 1 **caractérisé en ce qu'**il comprend en outre, pour au moins un équipement tiers (DSLAM') reliant la passerelle au point de raccordement, l'obtention d'informations relatives aux ressources réservées par au moins une autre passerelle connectée à cet équipement pour au moins un service fourni via cet équipement, et **en ce que**, au cours de l'étape de vérification (E70), on vérifie en outre à l'aide de ces informations que ledit au moins un équipement dispose de ressources réseaux nécessaires pour fournir le service requis par le terminal, l'étape de réservation (E90) des ressources étant mise en oeuvre si la passerelle connectée au terminal, le point de raccordement et ledit au moins un équipement disposent desdites ressources nécessaires pour fournir le service.

**10.** Programme d'ordinateur comportant des instructions pour l'exécution des étapes du procédé de traitement d'une requête selon la revendication 1 lorsque ledit programme est exécuté par un ordinateur.

**11.** Passerelle (HGW$_i$) connectée à un point de raccordement (DSLAM) à un réseau de télécommunications (NW), ladite passerelle comprenant des moyens de réception d'une requête d'accès à un service émise par un terminal connecté à cette passerelle,
ladite passerelle étant **caractérisée en ce qu'**elle comporte en outre :

- des moyens d'obtention d'informations relatives aux ressources réseau réservées par au moins une autre passerelle connectée à ce même point de raccordement pour au moins un service fourni via ce point de raccordement ;
- des moyens de vérification, à l'aide au moins de ces informations, qu'au moins la passerelle connectée au terminal et le point de raccordement disposent de ressources réseau nécessaires pour fournir le service requis par le terminal ;
- des moyens de réservation de ces ressources réseau et des moyens d'information de cette réservation d'au moins une autre passerelle connectée à ce même point de raccordement pour au moins un service fourni via ce point de raccordement, activés si tel est le cas ; et
- des moyens de rejet de l'accès au service activés sinon.

**12.** Passerelle selon la revendication 11 **caractérisée en ce qu'**elle est configurée pour être membre d'un groupe de diffusion multicast (@MC) associé au point de raccordement et **en ce qu'**elle est adaptée :

- à obtenir lesdites informations à partir d'au moins un message diffusé aux membres dudit groupe de diffusion multicast ; et
- à informer ladite au moins une autre passerelle dans un message diffusé auxdits membres dudit groupe de diffusion multicast.

13. Passerelle selon la revendication 12, **caractérisée en ce que** ledit groupe de diffusion multicast est un arbre IP multicast (@MC).

14. Système de contrôle d'admission (CAC-S) à au moins un service, **caractérisé en ce qu'**il comprend :

- un point de raccordement (DSLAM) à un réseau de télécommunications (NW) ; et
- une pluralité de passerelles (HGW$_i$) connectées au point de raccordement, au moins une desdites passerelles étant conformes à la revendication 11 pour traiter une requête d'accès audit au moins un service émise par un terminal connecté à cette passerelle.

**Claims**

1. Method for processing a request to access a service sent by a terminal (T), said method being implemented by a gateway (HGW$_1$) connected to the terminal and to a point of connection (DSLAM) to a telecommunication network (NW),
said processing method being **characterized in that** it comprises the following steps:

- obtaining (E30, E60, E130) information relating to network resources reserved by at least one other gateway connected to this same point of connection, for at least one service supplied via this point of connection;
- verifying (E70), using at least this information, that at the least the gateway connected to the terminal and the point of connection have network resources necessary to supply the service;
- if such is the case:

o reserving (E90) these network resources; and
o communicating (E100) this reservation for at least one other gateway connected to the point of connection for at least one service supplied via this point of connection;

- otherwise, refusing (E80) of access to the service.

2. Method for processing a request according to Claim 1, **characterized in that**, during said obtaining step (E130), said information is received from at least one message broadcast to the members of a multicast broadcast group associated with the point of connection and to which said gateway belongs,
and **in that**, during said communication step (E100), said at least one other gateway is informed in a message broadcast to said members of said multicast broadcast group.

3. Method for processing a request according to Claim 1, **characterized in that** it includes:

- a step of evaluating, using said information:

○ the network resources reserved by a number of gateways on a physical interface at the output of the point of connection for a set of classes of service supported by the point of connection; and
o the network resources reserved by a number of gateways on a physical interface at the output of the point of connection for at least one class of service of said set;

- a step of sending at least one message comprising the evaluation of these reserved network resources, to at least one other gateway connected to said point of connection.

4. Processing method according to Claim 3, **characterized in that** said sending step is implemented periodically, according to a determined period.

5. Method for processing a request according to Claim 1, **characterized in that** obtaining said information comprises:

- receiving:

    ○ information relating to the network resources reserved by a number of gateways on a physical interface at the output of the point of connection for a set of classes of service supported by the point of connection;
    ○ information relating to the network resources reserved by a number of gateways on a physical interface at the output of the point of connection for at least one class of service of said set; and

- updating a local database with this information for consultation during said verification.

6. Method for processing a request according to Claim 1, **characterized in that** it also includes a step of periodically sending, by said gateway connected to said terminal, a message indicating the network resources that it reserves for at least one service supplied via the point of connection to at least one other gateway connected to said point of connection.

7. Method for processing a request according to Claim 1, **characterized in that** the information relating to the network resources comprises:

- a bandwidth available on a physical interface at the output of the point of connection for a set of classes of service supported by the point of connection; and
- a bandwidth on a physical interface at the output of the point of connection for at least one class of service of said set.

8. Method for processing a request according to Claim 7, **characterized in that** obtaining said information comprises:

- receiving a message from the point of connection including said bandwidth available for a set of service classes and said bandwidth available for at least one class of service; and
- updating a local database with these bandwidths for consultation during said verification.

9. Method for processing a request according to Claim 1, **characterized in that** it also comprises, for at least one third-party element (DSLAM') linking the gateway to the point of connection, the obtaining of information relating to the resources reserved by at least one other gateway connected to this element for at least one service supplied via this element, and **in that**, during the verification step (E70), this information is also used to check that said at least one element has the network resources necessary to supply the service requested by the terminal, the step of reservation (E90) of the resources being implemented if the gateway connected to the terminal, the point of connection and said at least one element have said resources necessary to supply the service.

10. Computer program comprising instructions for executing the steps of the method for processing a request according to Claim 1 when said program is run by a computer.

11. Gateway (HGW$_1$) connected to a point of connection (DSLAM) to a telecommunication network (NW), said gateway comprising means for receiving a request to access a service sent by a terminal connected to this gateway, said gateway being **characterized in that** it also comprises:

- means for obtaining information relating to the network resources reserved by at least one other gateway connected to this same point of connection for at least one service supplied via this point of connection;
- means for verifying, using at least this information, that at least the gateway connected to the terminal and the point of connection have network resources necessary to supply the service requested by the terminal;
- means for reserving these network resources and means for communicating this reservation to at least one other gateway connected to this same point of connection for at least one service supplied via this point of connection, activated if such is the case; and
- means for refusing access to the service, activated otherwise.

12. Gateway according to Claim 11, **characterized in that** it is configured to be a member of a multicast broadcast group (@MC) associated with the point of connection and **in that** it is adapted:

- to obtain said information from at least one message broadcast to the members of said multicast broadcast group; and
- to inform said at least one other gateway in a message broadcast to said members of said multicast broadcast group.

13. Gateway according to Claim 12, **characterized in that** said multicast broadcast group is a multicast IP tree (@MC).

14. Admission control system (CAC-S) controlling admission to at least one service, **characterized in that** it comprises:

- a point of connection (DSLAM) to a telecommunication network (NW); and
- a plurality of gateways (HGW$_1$) connected to the point of connection, at least one of said gateways conforming to Claim 11 in order to process a request to access said at least one service sent by a terminal connected to this gateway.


**Patentansprüche**

1. Verfahren zur Verarbeitung einer Zugriffsanforderung auf einen Dienst, die von einem Endgerät (T) gesendet wird, wobei das Verfahren von einem Gateway (HGW$_i$) durchgeführt wird, das mit dem Endgerät und mit einem Anschlusspunkt (DSLAM) an ein Telekommunikationsnetz (NW) verbunden ist, wobei das Verarbeitungsverfahren **dadurch gekennzeichnet ist, dass** es die folgenden Schritte enthält:

- Erhalt (E30, E60, E130) von Informationen bezüglich von Netzressourcen, die von mindestens einem anderen mit diesem gleichen Anschlusspunkt verbundenen Gateway reserviert sind, für mindestens einen über diesen Anschlusspunkt gelieferten Dienst;
- Überprüfung (E70), mit Hilfe mindestens dieser Informationen, dass mindestens das mit dem Endgerät verbundene Gateway und der Anschlusspunkt über zum Liefern des Diensts notwendige Netzressourcen verfügen;
- wenn dies der Fall ist:

o Reservieren (E90) dieser Netzressourcen; und
o Information (E100) mindestens eines anderen mit dem Anschlusspunkt verbundenen Gateways für mindestens einen über diesen Anschlusspunkt gelieferten Dienst über diese Reservierung;

- ansonsten Zurückweisung (E80) des Zugriffs auf den Dienst.

2. Verfahren zur Verarbeitung einer Anforderung nach Anspruch 1, **dadurch gekennzeichnet, dass** während des Erhaltungsschritts (E130), die Informationen ausgehend von mindestens einer Mitteilung empfangen werden, die an die Mitglieder einer Multicast-Rundsendungsgruppe verbreitet wird, die dem Anschlusspunkt zugeordnet ist und zu der das Gateway gehört, und dass während des Informationsschritts (E100) das mindestens eine andere Gateway in einer an die Mitglieder der Multicast-Rundsendungsgruppe rundgesendeten Mitteilung informiert wird.

3. Verfahren zur Verarbeitung einer Anforderung nach Anspruch 1, **dadurch gekennzeichnet, dass** es aufweist:

- einen Schritt der Bewertung mit Hilfe der Informationen:

o der von mehreren Gateways reservierten Netzressourcen an einer physikalischen Schnittstelle am Ausgang des Anschlusspunkts für eine Einheit von Dienstklassen, die vom Anschlusspunkt unterstützt werden; und
o der von mehreren Gateways reservierten Netzressourcen an einer physikalischen Schnittstelle am Ausgang des Anschlusspunkts für mindestens eine Dienstklasse der Einheit;

- einen Schritt des Sendens mindestens einer Mitteilung, die die Bewertung dieser reservierten Netzressourcen enthält, an mindestens ein anderes mit dem Anschlusspunkt verbundenes Gateway.

4. Verarbeitungsverfahren nach Anspruch 3, **dadurch gekennzeichnet, dass** der Sendeschritt periodisch gemäß einer bestimmten Periode durchgeführt wird.

5. Verfahren zur Verarbeitung einer Anforderung nach Anspruch 1, **dadurch gekennzeichnet, dass** der Erhalt der Informationen enthält:

- den Empfang:

o von Informationen bezüglich der von mehreren Gateways reservierten Netzressourcen an einer physikalischen Schnittstelle am Ausgang des Anschlusspunkts für eine Einheit von Dienstklassen, die vom Anschlusspunkt unterstützt werden;
o von Informationen bezüglich der von mehreren Gateways reservierten Netzressourcen an einer physikalischen Schnittstelle am Ausgang des Anschlusspunkts für mindestens eine Dienstklasse der Einheit; und

- die Aktualisierung einer lokalen Basis mit diesen Informationen zur Abfrage bei der Überprüfung.

6. Verfahren zur Verarbeitung einer Anforderung nach Anspruch 1, **dadurch gekennzeichnet, dass** es außerdem einen Schritt des periodischen Sendens einer Mitteilung durch das mit dem Endgerät verbundene Gateway aufweist, die die Netzressourcen angibt, die es für mindestens Dienst reserviert, der über den Anschlusspunkt an mindestens ein anderes mit dem Anschlusspunkt verbundenes Gateway geliefert wird.

7. Verfahren zur Verarbeitung einer Anforderung nach Anspruch 1, **dadurch gekennzeichnet, dass** die Informationen bezüglich der Netzressourcen enthalten:

- eine Bandbreite, die an einer physikalischen Schnittstelle am Ausgang des Anschlusspunkts für eine Einheit von Dienstklassen verfügbar ist, die vom Anschlusspunkt unterstützt werden; und
- eine Bandbreite an einer physikalischen Schnittstelle am Ausgang des Anschlusspunkts für mindestens eine Dienstklasse der Einheit.

8. Verfahren zur Verarbeitung einer Anforderung nach Anspruch 7, **dadurch gekennzeichnet, dass** der Erhalt der Informationen enthält:

- den Empfang einer Mitteilung vom Anschlusspunkt, die die für eine Einheit von Dienstklassen verfügbare Bandbreite und die für mindestens eine Dienstklasse verfügbare Bandbreite enthält; und
- die Aktualisierung einer lokalen Basis mit diesen Bandbreiten zur Abfrage bei der Überprüfung.

9. Verfahren zur Verarbeitung einer Anforderung nach Anspruch 1, **dadurch gekennzeichnet, dass** es außerdem für mindestens eine Dritteinrichtung (DSLAM'), die das Gateway mit dem Anschlusspunkt verbindet, den Erhalt von Informationen bezüglich der von mindestens einem anderen mit dieser Einrichtung verbundenen Gateway für mindestens einen über diese Einrichtung gelieferten Dienst enthält, und dass während des Überprüfungsschritts (E70) außerdem mit Hilfe dieser Informationen überprüft wird, ob die mindestens eine Einrichtung über die notwendigen Netzressourcen verfügt, um den vom Endgerät geforderten Dienst zu liefern, wobei der Reservierungsschritt (E90) der Ressourcen durchgeführt wird, wenn das mit dem Endgerät verbundene Gateway, der Anschlusspunkt und die mindestens eine Einrichtung über die zum Liefern des Diensts notwendigen Ressourcen verfügen.

10. Computerprogramm, das Anweisungen zur Ausführung der Schritte des Verfahrens zur Verarbeitung einer Anforderung nach Anspruch 1 aufweist, wenn das Programm von einem Computer ausgeführt wird.

11. Gateway (HGW$_i$), das mit einem Anschlusspunkt (DSLAM) an ein Telekommunikationsnetz (NW) verbunden ist, wobei das Gateway Empfangseinrichtungen einer Zugriffsanforderung auf einen Dienst enthält, die von einem mit diesem Gateway verbundenen Endgerät gesendet wird,
wobei das Gateway **dadurch gekennzeichnet ist, dass** es außerdem aufweist:

- Einrichtungen zum Erhalt von Informationen bezüglich der von mindestens einem anderen mit diesem gleichen Anschlusspunkt verbundenen Gateway reservierten Netzressourcen für mindestens einen über diesen Anschlusspunkt gelieferten Dienst;
- Einrichtungen zur Überprüfung, mit Hilfe mindestens dieser Informationen, dass mindestens das mit dem Endgerät verbundene Gateway und der Anschlusspunkt über die notwendigen Netzressourcen verfügen, um den vom Endgerät geforderten Dienst zu liefern;
- Einrichtungen zum Reservieren dieser Netzressourcen und Einrichtungen zur Information über diese Reservierung an mindestens ein anderes mit diesem gleichen Anschlusspunkt verbundenes Gateway für mindestens einen über diesen Anschlusspunkt gelieferten Dienst, die aktiviert werden, wenn dies der Fall ist; und
- Einrichtungen zur Zurückweisung des Zugriffs auf den Dienst, die ansonsten aktiviert werden.

**12.** Gateway nach Anspruch 11, **dadurch gekennzeichnet, dass** es konfiguriert ist, um Mitglied einer Multicast-Rundsendungsgruppe (@MC) zu sein, die dem Anschlusspunkt zugeordnet ist, und dass es geeignet ist:

    - um die Informationen ausgehend von mindestens einer Mitteilung zu erhalten, die an die Mitglieder der Multicast-Rundsendungsgruppe rundgesendet wird; und
    - um das mindestens eine andere Gateway in einer Mitteilung zu informieren, die an die Mitglieder der Multicast-Rundsendungsgruppe rundgesendet wird.

**13.** Gateway nach Anspruch 12, **dadurch gekennzeichnet, dass** die Multicast-Rundsendungsgruppe ein Multicast-IP-Baum (@MC) ist.

**14.** System zur Kontrolle der Zulassung (CAC-S) zu mindestens einem Dienst, **dadurch gekennzeichnet, dass** es enthält:

    - einen Anschlusspunkt (DSLAM) an ein Telekommunikationsnetz (NW); und
    - eine Vielzahl von Gateways (HGW$_i$), die mit dem Anschlusspunkt verbunden sinn,
    wobei mindestens eines der Gateways Anspruch 11 entspricht, um eine Zugriffsanforderung auf den mindestens einen Dienst zu verarbeiten, die von einem mit diesem Gateway verbundenen Endgerät gesendet wird.

FIG.1

FIG.2

FIG.4

FIG.3

FIG.5

**EP 2 141 868 B1**

**Documents brevets cités dans la description**

- US 2006028981 A